# EUROPEAN PATENT SPECIFICATION

(11) **EP 3 219 658 B1**
(45) Date of publication and mention of the grant of the patent: **08.05.2019**
(21) Application number: 17159157.1
(22) Date of filing: 03.03.2017
(51) Int. Cl.: B66C 1/10, B66C 1/12, B66C 1/16, F16H 57/025, F03D 80/50

(54) **A HOIST TOOL FOR HANDLING A SHRINK ELEMENT OF A GEAR SYSTEM**
HEBEWERKZEUG ZUR HANDHABUNG EINES SCHRUMPFELEMENTS EINES GETRIEBESYSTEMS
OUTIL DE LEVAGE POUR MANIPULER UN ÉLÉMENT RÉTRACTABLE D'UN SYSTÈME D'ENGRENAGE

(30) Priority: 04.03.2016 US 201615061396
(43) Date of publication of application: 20.09.2017
(73) Proprietor: Moventas Gears Oy, 40701 Jyväskylä (FI)
(72) Inventor: FREEMAN, Casey, Hillsboro, OR 97124 (US)
(74) Representative: Finnpatent Oy

(56) References cited:
- DE-U1-202004 020 317
- FR-A1- 2 979 335
- US-A- 3 970 342
- US-A1- 2016 305 532

## Description

### Field of the disclosure

The disclosure relates generally to maintenance of a gear system. More particularly, the disclosure relates to a hoist tool for handling a shrink element of a gear system, the shrink element being designed for pressing a hollow shaft radially against an inner shaft a part of which is inside the hollow shaft. Furthermore, the disclosure relates to a method for handling a shrink element of a gear system during maintenance work.

### Background

In many cases a gear system comprises a gear module, a first rotating coupling between the gear module and a first external system, and a second rotating coupling between the gear module and a second external system. The gear module may comprise for example one or more planetary gear stages and/or one or more spur gear stages. The first external system can be for example a wind turbine and the second external system can be for example a generator. In wind power applications of the kind mentioned above, the rotating coupling between the wind turbine and the gear module may be such that the shaft of the gear module is hollow and an end-section of the shaft of the wind turbine is inside the hollow shaft. The rotating coupling comprises a shrink element configured surround the hollow shaft of the gear module and to press the hollow shaft radially against the end section of the shaft of the wind turbine so as to enable torque transfer from the wind turbine to the gear module.

Maintenance of a gear system comprises often, or at least sometimes, moving one or more gear stages and/or other elements in the axial direction so that appropriate elements can be removed from the gear system and/or so that access to appropriate elements of the gear system can be provided for maintenance personnel. For example, there can be a need to remove the above-mentioned shrink element and/or a gear ring of a planetary gear stage in order to achieve a situation where the weight of the remaining gear system is less than the maximum available crane capacity. An inherent challenge related to maintenance work that comprises moving one or more gear stages and/or other elements in the axial direction is a need for crane capacity for compensating for a sufficient portion of the weight of the gear system during the axial movement.

Publication DE202004020317 describes a wind power system that comprises a gearbox whose input is coupled to a wind turbine shaft with a separate bearing. During e.g. a maintenance work, a holder device is used to hold the wind turbine shaft in a desired position when a support of the wind turbine shaft through the gearbox is missing.

### Summary

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the present invention, there is provided a new hoist tool for handling a shrink element of a gear system where the shrink element is suitable for pressing a hollow shaft radially against an inner shaft a part of which is inside the hollow shaft. A hoist tool according to the invention comprises:
- a suspension section,
- support legs for leaning on a foundation structure of the gear system and for supporting the suspension section to be above the shrink element,
- a lift sling for surrounding the shrink element, and
- a force generating system connected between the suspension section and the lift sling and suitable for generating lifting force on the lift sling so as to suspend the shrink element.

The weight of the above-mentioned shrink element can be compensated for with the aid of the hoist tool and therefore no crane capacity is needed for compensating for the weight of the shrink element. In many cases it may be advantageous to suspend the gear system so that the weight of the shrink element is compensated for with the aid of the hoist tool and the rest of the weight of the gear system, e.g. the weight of a gear module, is wholly or partially compensated for with a crane for example when the gear system or a part of it is moved axially at the operating site of the gear system. The operating site can be e.g. a nacelle of a wind power plant. As the shrink element can be suspended by the hoist tool, the above-mentioned crane can be kept attached to the rest of the gear system and therefore in many cases there is no need to use the crane for handling the shrink element. Furthermore, in many cases, a hoist tool of the kind described above can be used as an alignment tool during installation or reinstallation of a gear system.

A hoist tool according to an exemplifying and non-limiting embodiment of the invention further comprises a spacer element that is suitable for being placed on the above-mentioned inner shaft and suitable for keeping the shrink element concentric with respect to the inner shaft in a situation in which the hollow shaft is absent from a room between the shrink element and the inner shaft.

In accordance with the present invention, there is provided also a new method for handling a shrink element of a gear system during maintenance work. A method according to the invention comprises at least the following actions at an operating site of the gear system:
- installing a tool so that the tool has a physical contact with the shrink element and becomes capable of suspending the shrink element, and
- directing, to the shrink element, lifting force with the aid of the tool so as to at least partly compensate for the weight of the shrink element.

The above-mentioned tool is a hoist tool according to the invention.

The operating site of the gear system where the above-mentioned method is carried out can be, for example but not necessarily, a nacelle of a wind power plant.

A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying embodiments when read in connection with the accompanying drawings.

The verbs "to comprise" and "to include" are used in this document as open limitations that neither exclude nor require the existence of also un-recited features. The features recited in the accompanied dependent claims are mutually freely combinable unless otherwise explicitly stated. Furthermore, it is to be understood that the use of "a" or "an", i.e. a singular form, throughout this document does not exclude a plurality.

### Brief description of figures

Exemplifying and non-limiting embodiments of the invention and their advantages are explained in greater detail below in the sense of examples and with reference to the accompanying drawings, in which:
figure 1 a shows a section view of a part of a gear system according to the prior art,
figure 1b illustrates an exemplifying situation in which a hoist tool according to an exemplifying and non-limiting embodiment of the invention has been arranged to suspend the shrink element of the gear system shown in figure 1a,
figures 2a and 2b illustrate a hoist tool according to another exemplifying and non-limiting embodiment of the invention,
figures 3a-3c illustrate a way of using a hoist tool according to an exemplifying and non-limiting embodiment of the invention, and
figure 4 shows a flowchart of a method according to an exemplifying and non-limiting embodiment of the invention for handling a shrink element of a gear system during maintenance work.

### Description of exemplifying and non-limiting embodiments

The specific examples provided in the description below should not be construed as limiting the scope and/or the applicability of the accompanied claims. Lists and groups of examples provided in the description are not exhaustive unless otherwise explicitly stated.

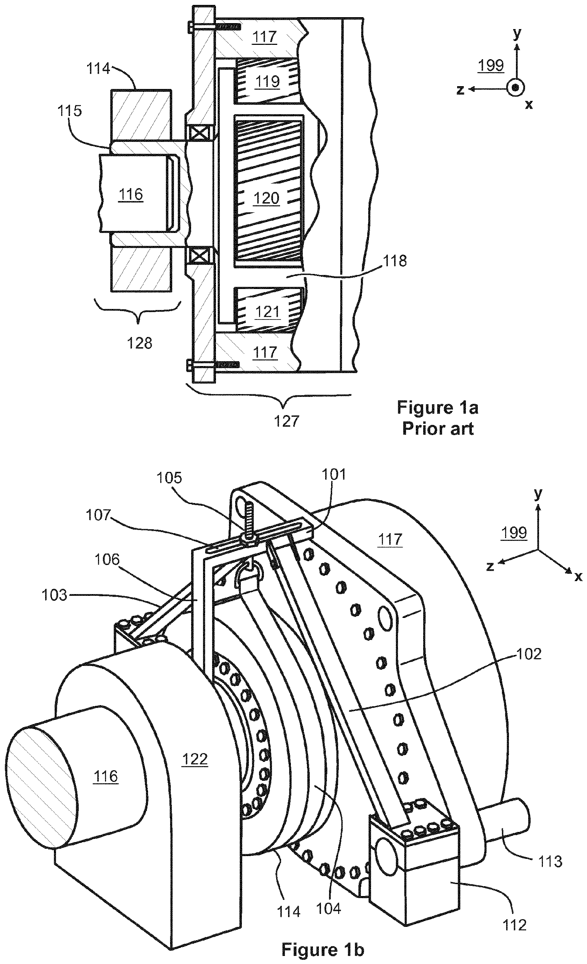

Figure 1a shows a section view of a part of a gear system according to the prior art. The section plane is parallel with the yz-plane of a coordinate system 199. The gear system comprises a gear module 127 that comprises at least one gear stage. The gear system comprises a rotating coupling 128 for connecting the gear module to a shaft 116 of an external system. The external system can be for example a wind turbine and the shaft 116 can be the main shaft of the wind turbine. In the exemplifying case illustrated in figure 1a, the gear module 127 comprises a planetary gear stage which comprises a gear ring 117, a planet carrier 118, and planet wheels. In figure 1a, three of the planet wheels are denoted with references 119, 120, and 121. A hollow shaft 115 is connected to the planet carrier 118 as illustrated in figure 1a. The rotating coupling 128 comprises a shrink element 114 configured surround the hollow shaft 115 and to press the hollow shaft radially against the end-section of the shaft 116 so as to enable torque transfer between the shaft 116 and the hollow shaft 115. It is worth noting that the gear system illustrated in figure 1a is presented for illustrative purposes only in order to explain hoist tools according to exemplifying and non-limiting embodiments of the invention. Furthermore, it is worth noting that hoist tools according to exemplifying and non-limiting embodiments of the invention can be used in conjunction with gear systems different from the gear system illustrated in figure 1a.

Figure 1b illustrates the gear system shown in figure 1a in a case where a hoist tool according to an exemplifying and non-limiting embodiment of the invention has been arranged to suspend the shrink element 114 of the gear system. In the exemplifying situation shown in figure 1b, the shaft 116 is supported with a shaft clamp 122 so that the shaft 116 does not substantially direct forces to the gear system. The hoist tool comprises a suspension section 101 and support legs 102 and 103. As illustrated in figure 1b, the support legs 102 and 103 are suitable for leaning on a foundation structure of the gear system so that the suspension section 101 is above the shrink element 114. In this exemplifying case, the hoist tool further comprises a support rod 106 for leaning on the shaft 116 and for supporting the suspension section 101 to be above the shrink element 114. It is, however, also possible that a hoist tool according to another exemplifying and non-limiting embodiment of the invention comprises such support legs for leaning on a foundation structures that there is no need for a support rod for leaning on a shaft. In figure 1b, a part of the foundation structure of the gear system is denoted with a reference 112. The gear module is supported to the foundation structure with the aid of dowel pins one of which is denoted with a reference 113 in figure 1b. The hoist tool comprises a lift sling 104 for surrounding the shrink element 114. The hoist tool comprises a force generating system 105 connected between the suspension section 101 and the lift sling 104. The force generating system 105 is suitable for generating lifting force on the lift sling 104 so as to suspend the shrink element 114. In the situation shown in figure 1b, the lifting force is in the positive y-direction of the coordinate system 199.

In the exemplifying hoist tool illustrated in figure 1b, the force generating system 105 comprises a threaded rod and a nut for generating the lifting force on the lift sling 104 so as to suspend the shrink element 114. It is also possible that a force generating system of a hoist tool according to another exemplifying and non-limiting embodiment of the invention comprises a hydraulic cylinder and a corresponding piston, a chain hoist, or some other suitable force generating means. The suspension section 101 is configured to allow the force generating system 105 to be moved in the axial direction of the shafts 115 and 116 so as to enable the shrink element 114 to be moved in the axial direction when the shrink element 114 is being suspended by the lift sling 104. In figures 1a and 1b, the axial direction is parallel with the z-direction of the coordinate system 199. In the exemplifying hoist tool illustrated in figure 1b, the suspension section 101 comprises an elongated slit 107 whose edges are configured to mechanically support the force generating system 105 so that the force generating system is moveable in the axial direction. The suspension section 101 and/or the force generating system 105 can be provided with friction reduction means such as for example Teflon sliders or tracks provided with rollers. The friction reduction means are not shown in figure 1b.

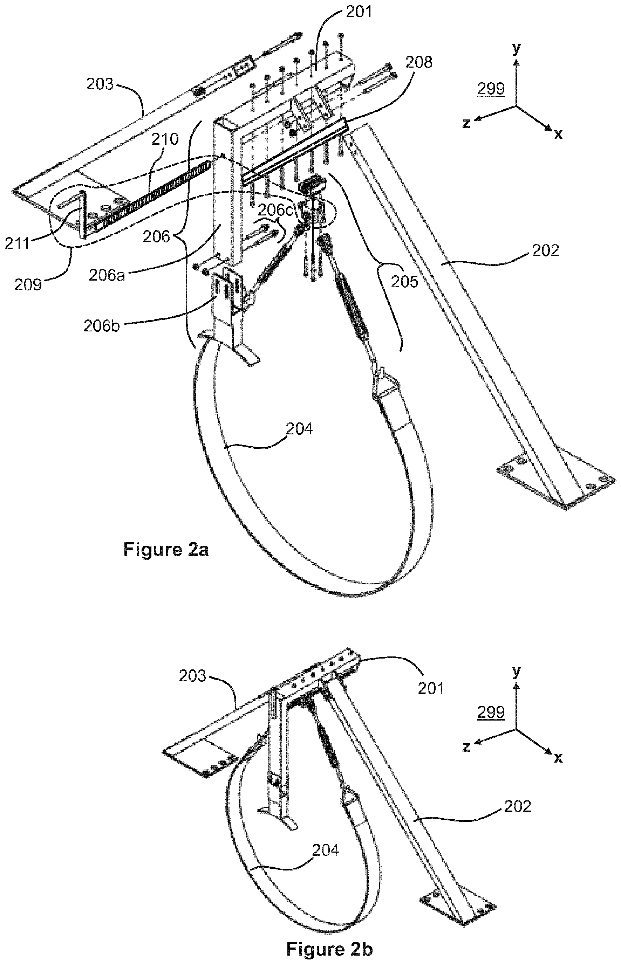

Figure 2a shows an exploded view of a hoist tool according to an exemplifying and non-limiting embodiment of the invention. Figure 2b shows the hoist tool as assembled. The hoist tool comprises a suspension section 201 and support legs 202 and 203. The support legs 202 and 203 are suitable for leaning on a foundation structure of a gear system in the same way as illustrated in figure 1b. The hoist tool further comprises a support rod 206 that is suitable for leaning on a shaft in the same way as illustrated in figure 1b. The support rod comprises two portions 206a and 206b and fastening elements 206c. The fastening elements 206c are suitable for fastening the two portions 206a and 206b on each other so that the length of the support rod 206 is changeable by changing the mutual position of the two portions of the support rod 206. In this exemplifying case, the fastening elements 206c comprise bolts and nuts.

The hoist tool comprises a lift sling 204 for surrounding a shrink element of a gear system in the same way as illustrated in figure 1b. The hoist tool comprises a force generating system 205 connected between the suspension section 201 and the lift sling 204. The force generating system 205 is suitable for generating lifting force on the lift sling 204 in the y-direction of a coordinate system 299. In the exemplifying hoist tool illustrated in figures 2a and 2b, the force generating system 205 comprises two turnbuckles and corresponding turnbuckle screws for generating the lifting force on the lift sling 204.

The suspension section 201 of the hoist tool is configured to allow the force generating system 205 to be moved in directions parallel with the z-axis of the coordinate system 299 so as to enable a shrink element of a gear system to be moved in its axial direction when the shrink element is suspended by the lift sling 204. In this exemplifying hoist tool, the suspension section 201 comprises a guide rail 208 for mechanically supporting the force generating system 205 so that the force generating system is moveable in the directions parallel with the z-axis of the coordinate system 299. The suspension section further comprises a drive system 209 for moving the force generating system 205 in the directions parallel with the z-axis of the coordinate system 299. In this exemplifying case, the drive system 209 comprises a rotatable threaded rod 210 for moving the force generating system 205 in the directions parallel with the z-axis of the coordinate system 299. The drive system 209 comprises further comprises a crank 211 for rotating the rotatable threaded rod 210.

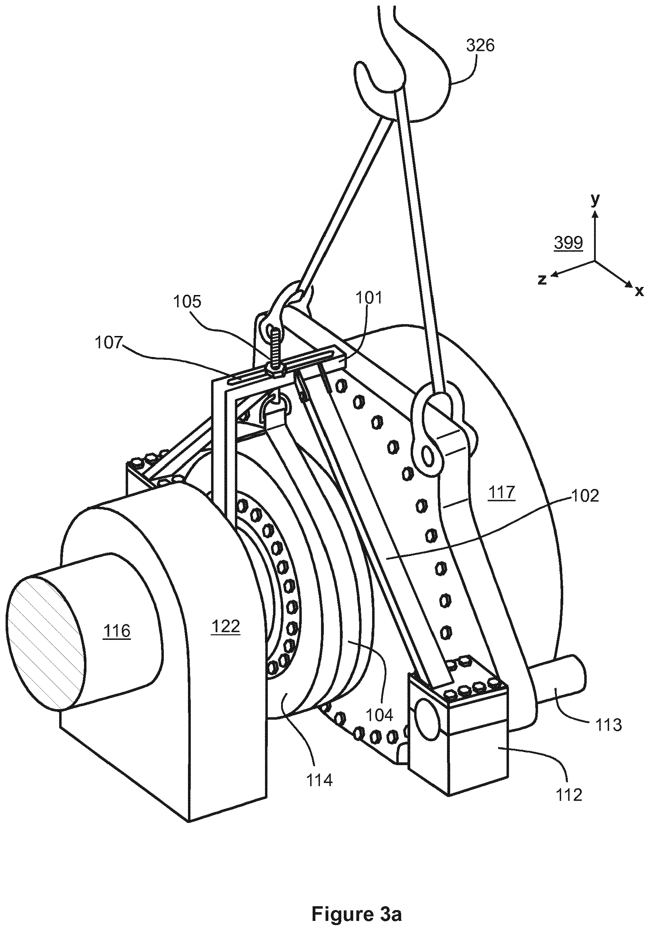

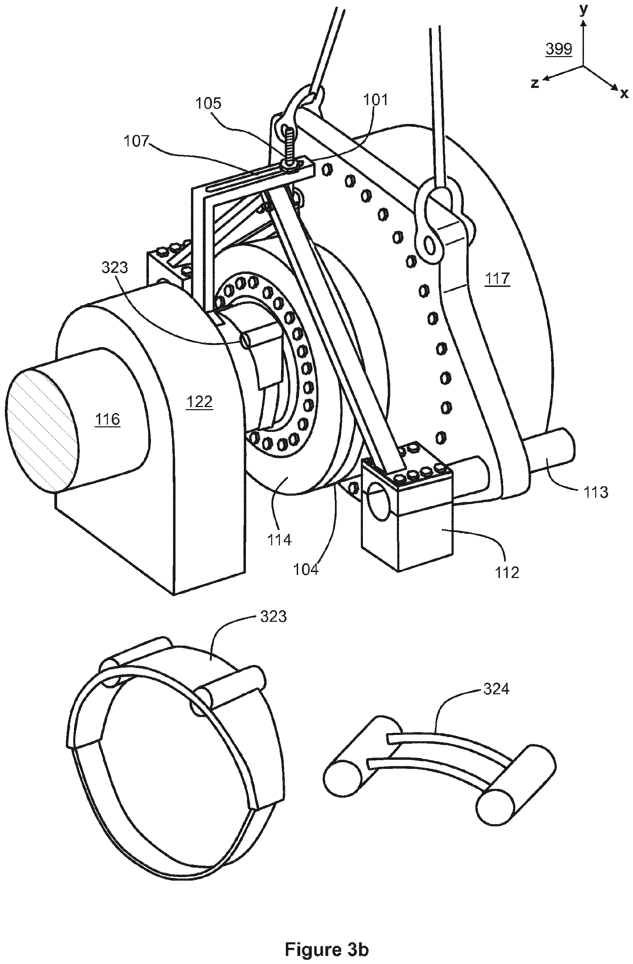

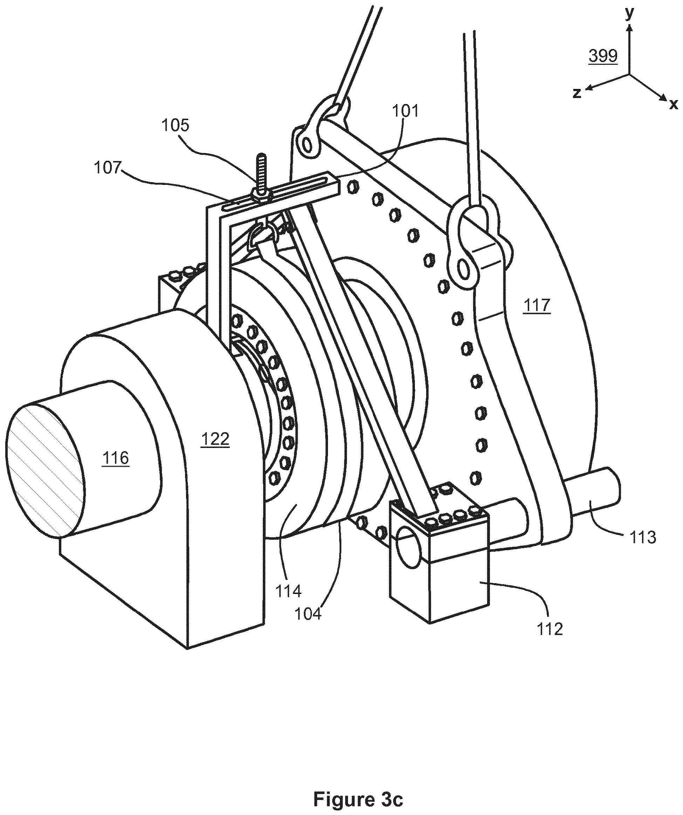

Figures 3a, 3b, and 3c illustrate a way of using a hoist tool according to an exemplifying and non-limiting embodiment of the invention. In this exemplifying case, the hoist tool is similar to the hoist tool described above with reference to figure 1b. Figure 3a shows a situation in which a shaft clamp 122 has been installed so that a shaft 116 does not substantially direct forces to a gear system under maintenance work. Furthermore, the hoist tool has been arranged to suspend a shrink element 114 and a crane has been arranged to suspend a gear module of the gear system. In figure 3a, the hook of the crane is denoted with a reference 326. The shrink element 114 is loosened and the lift sling 104 of the hoist tool is hoisted until the shrink element 114 does not direct substantive force to the shaft of the gear module. Thereafter, the shrink element 114 and the gear module are moved in the negative z-direction of a coordinate system 399. Figure 3b shows a situation in which the shrink element 114 and the gear module have been moved in the negative z-direction of the coordinate system 399. In this exemplifying case, the hoist tool comprises a spacer element 323 that is suitable for being placed on the shaft 116 as illustrated in figure 3b. Figure 3b shows also a magnified view of the spacer element 323 and an exemplifying alternative spacer element 324. After the spacer element 323 has been placed on the shaft 116, the shrink element 114 is moved in the positive z-direction of the coordinate system 399 so that the spacer element 323 gets between the shrink element 114 and the shaft 116. The purpose of the spacer element 323 is to keep the shrink element 114 concentric with respect to the shaft 116. The spacer element 323 may comprise low friction materials such as for example Teflon and/or Delrin. Figure 3c shows a situation in which the shrink element 114 has been moved in the positive z-direction of the coordinate system 399. Thereafter, the dowel pins can be removed and the gear module can be lifted away with the crane so that the shrink element 114 is not involved, i.e. there no need to lift the shrink element together with the gear module.

In conjunction with certain gear systems, there is a need to arrange a situation of the kind illustrated in figure 3b in order to have access to all bolts which are fastening the gear ring 117. After the bolts have been removed, the gear ring 117 can be removed and lifted away. Thereafter, the dowel pins can be removed and the gear module without the gear ring 117 can be lifted away with the crane. In figures 3a-3c, one of the dowel pins is denoted with the reference 113. If the hoist tool is removed, the shrink element 114 can be lifted away together with the gear module from which the gear ring 117 has been removed earlier. Alternatively, the shrink element 114 can be moved in the positive z-direction so that the situation illustrated in figure 3c takes place and thereafter the gear module without the gear ring 117 can be lifted away so that the shrink element 114 is not involved.

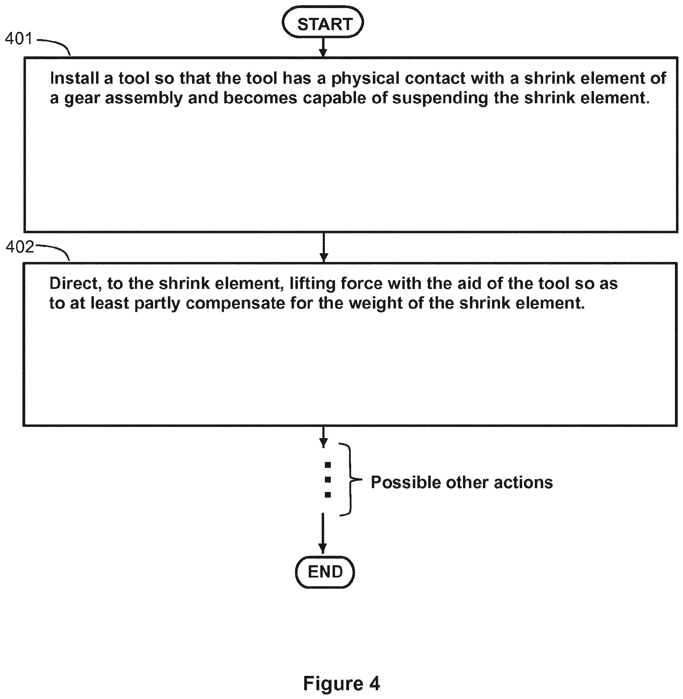

Figure 4 shows a flowchart of a method according to an exemplifying and non-limiting embodiment of the invention for handling a shrink element of a gear system during maintenance work. The shrink element is designed for pressing a hollow shaft radially against an inner shaft a part of which is inside the hollow shaft so as to enable torque transfer between the hollow shaft and the inner shaft. The gear system may comprise for example one or more planetary gear stages and/or one or more spur gear stages.

The method comprises at least the following actions at an operating site of the gear system:
- action 401: installing a tool so that the tool has a physical contact with the shrink element and becomes capable of suspending the above-mentioned shrink element, and
- action 402: directing, to the shrink element, lifting force with the aid of the tool so as to at least partly compensate for the weight of the shrink element.

The above-mentioned tool is a hoist tool according to an embodiment of the invention. The tool can be for example a hoist tool such as described above with reference to figure 1b or to figures 2a and 2b.

In a method according to an exemplifying and non-limiting embodiment of the invention, the gear system is a part of a wind power plant and the operating site of the gear system is the nacelle of the wind power plant.

In a method according to an exemplifying and non-limiting embodiment of the invention, the possible other actions mentioned in figure 4 comprise:
- placing a spacer element on the above-mentioned inner shaft, and
- sliding the shrink element in an axial direction of the hollow shaft onto the spacer element so that the shrink element is moved away from a position where the shrink element surrounds the hollow shaft, the spacer element keeping the shrink element concentric with respect to the inner shaft when the shrink element is on the spacer element.

The specific examples provided in the description given above should not be construed as limiting the scope and/or the applicability of the accompanied claims. Lists and groups of examples provided in the description given above are not exhaustive unless otherwise explicitly stated.

## Claims

1. A hoist tool for handling a shrink element of a gear system, the shrink element being designed for pressing a hollow shaft radially against an inner shaft, the hoist tool comprising:
- a suspension section (101, 201),
- support legs (102, 103, 202, 203) for leaning on a foundation structure of the gear system and for supporting the suspension section to be above the shrink element,
**characterized in that** the hoist tool further comprises:
- a lift sling (104, 204) for surrounding the shrink element, and
- a force generating system (105, 205) connected between the suspension section and the lift sling and suitable for generating lifting force on the lift sling so as to suspend the shrink element.

2. A hoist tool according to claim 1, wherein the hoist tool further comprises a spacer element (323, 324) suitable for being placed on the inner shaft and for keeping the shrink element concentric with respect to the inner shaft in a situation in which the hollow shaft is absent from a room between the shrink element and the inner shaft.

3. A hoist tool according to claim 1, wherein the force generating system (105) comprises a threaded rod and a nut for generating the lifting force on the lift sling so as to suspend the shrink element.

4. A hoist tool according to claim 1, wherein the force generating system (205) comprises one or more turnbuckles and turnbuckle screws for generating the lifting force on the lift sling so as to suspend the shrink element.

5. A hoist tool according to claim 1, wherein the hoist tool further comprises a support rod (106, 206) for leaning on the inner shaft and for supporting the suspension section to be above the shrink element.

6. A hoist tool according to claim 5, wherein the support rod (206) comprises two portions (206a, 206b) and fastening elements (206c) for fastening the two portions on each other so that a length of the support rod is changeable by changing a mutual position of the two portions.

7. A hoist tool according to claim 1, wherein the suspension section (101, 201) is configured to allow the force generating system to be moved in an axial direction of the hollow shaft so as to enable the shrink element to be moved in the axial direction when the shrink element is suspended by the lift sling.

8. A hoist tool according to claim 7, wherein the suspension section (101) comprises an elongated slit (107) whose edges are configured to mechanically support the force generating system so that the force generating system is moveable in the axial direction.

9. A hoist tool according to claim 7, wherein the suspension section (201) comprises a guide rail (208) for mechanically supporting the force generating system so that the force generating system is moveable in the axial direction.

10. A hoist tool according to claim 7, wherein the suspension section comprises a drive system (209) for moving the force generating system in the axial direction.

11. A hoist tool according to claim 10, wherein the drive system comprises a rotatable threaded rod (210) for moving the force generating system in the axial direction in response to rotation of the rotatable threaded rod.

12. A method for handling a shrink element of a gear system during maintenance work, the shrink element being designed for pressing a hollow shaft radially against an inner shaft, the method comprising at least the following actions at an operating site of the gear system:
- installing (401) a tool so that the tool has a physical contact with the shrink element and becomes capable of suspending the shrink element, and
- directing (402), to the shrink element, lifting force with the aid of the tool so as to at least partly compensate for weight of the shrink element,
**characterized in that** the tool is a hoist tool that comprises:
- a suspension section (101, 201),
- support legs (102, 103, 202, 203) for leaning on a foundation structure of the gear system and for supporting the suspension section to be above the shrink element,
- a lift sling (104, 204) for surrounding the shrink element, and
- a force generating system (105, 205) connected between the suspension section and the lift sling and suitable for generating the lifting force so as to at least partly compensate for the weight of the shrink element.

13. A method according to claim 12, wherein the method comprises placing a spacer element (323, 324) on the inner shaft and sliding the shrink element in an axial direction of the hollow shaft onto the spacer element so that the shrink element is moved away from a position where the shrink element surrounds the hollow shaft, the spacer element keeping the shrink element concentric with respect to the inner shaft when the shrink element is on the spacer element.

14. A method according to claim 12 or 13, wherein the gear system is a part of a wind power plant and the operating site of the gear system is a nacelle of the wind power plant.

## Patentansprüche

1. Hebewerkzeug zur Handhabung eines Schrumpfelements eines Getriebesystems, wobei das Schrumpfelement dafür vorgesehen ist, eine Hohlwelle radial gegen eine innere Welle zu drücken, das Hebewerkzeug umfassend:
- einen Aufhängungsbereich (101, 201),
- Stützschenkel (102, 103, 202, 203), die auf einer Fundamentstruktur des Getriebesystems lehnen und den Aufhängungsbereich über dem Schrumpfelement halten,
**dadurch gekennzeichnet, dass** das Hebewerkzeug ferner umfasst:
- einen Hubriemen (104, 204), der das Schrumpfelement umgibt, und
- ein Krafterzeugungssystem (105, 205), das zwischen dem Aufhängungsbereich und dem Hubriemen verbunden ist und dafür geeignet ist, eine Hubkraft an dem Hubriemen zu erzeugen, um das Schrumpfelement aufzuhängen.

2. Hebewerkzeug nach Anspruch 1, wobei das Hebewerkzeug ferner ein Abstandselement (323, 324) umfasst zur Anordnung an der inneren Welle ausgelegt ist und dazu dient, das Schrumpfelement in einer Situation, in der die Hohlwelle in einem Raum zwischen dem Schrumpfelement und der inneren Welle fehlt, in Bezug auf die innere Welle konzentrisch zu halten.

3. Hebewerkzeug nach Anspruch 1, wobei das Krafterzeugungssystem (105) eine Gewindestange und eine Mutter zur Erzeugung der Hubkraft an dem Hubriemen, um das Schrumpfelement aufzuhängen, umfasst.

4. Hebewerkzeug nach Anspruch 1, wobei das Krafterzeugungssystem (205) ein(e) oder mehrere Spannschlösser und Spannschrauben zur Erzeugung der Hubkraft an dem Hubriemen, um das Schrumpfelement aufzuhängen, umfasst.

5. Hebewerkzeug nach Anspruch 1, wobei das Hebewerkzeug ferner eine Stützstange (106, 206) umfasst, die auf der inneren Welle lehnt und den Aufhängungsbereich über dem Schrumpfelement hält.

6. Hebewerkzeug nach Anspruch 5, wobei die Stützstange (206) zwei Abschnitte (206a, 206b) und Befestigungselemente (206c) zur Befestigung der zwei Abschnitte derart aneinander, dass eine Länge der Stützstange durch Verändern einer gegenseitigen Lage der zwei Abschnitte veränderbar ist, umfasst.

7. Hebewerkzeug nach Anspruch 1, wobei der Aufhängungsbereich (101, 201) dafür ausgelegt ist, Kraftübertragungssystem zu erlauben, derart in einer axialen Richtung der Hohlwelle bewegt zu werden, dass es dem Schrumpfelement ermöglicht wird, in der axialen Richtung bewegt zu werden, wenn das Schrumpfelement durch den Hubriemen aufgehängt ist.

8. Hebewerkzeug nach Anspruch 7, wobei der Aufhängungsbereich (101) einen länglichen Schlitz (107) umfasst, dessen Ränder dafür ausgelegt sind, das Krafterzeugungssystem derart mechanisch zu stützen, dass das Krafterzeugungssystem in der axialen Richtung bewegbar ist.

9. Hebewerkzeug nach Anspruch 7, wobei der Aufhängungsbereich (201) eine Führungsschiene (208) zum mechanischen Stützen des Krafterzeugungssystems derart, dass das Krafterzeugungssystem in der axialen Richtung bewegbar ist, umfasst.

10. Hebewerkzeug nach Anspruch 7, wobei der Aufhängungsbereich ein Antriebssystem (209) zum Bewegen des Krafterzeugungssystems in der axialen Richtung umfasst.

11. Hebewerkzeug nach Anspruch 10, wobei das Antriebssystem eine drehbare Gewindestange (210) umfasst, um das Krafterzeugungssystem als Reaktion auf eine Drehung der drehbaren Gewindestange in der axialen Richtung zu drehen.

12. Verfahren zur Handhabung eines Schrumpfelements eines Getriebesystems bei Wartungsarbeiten, wobei das Schrumpfelement dafür vorgesehen ist, eine Hohlwelle radial gegen eine innere Welle zu drücken, wobei das Verfahren mindestens die folgenden Tätigkeiten an einem Einsatzort des Getriebesystems umfasst:
- Installieren (401) eines Werkzeugs derart, dass das Werkzeug einen physischen Kontakt mit dem Schrumpfelement aufweist und befähigt wird, das Schrumpfelement anzuheben, und
- Lenken (402), mithilfe des Werkzeugs, einer Hubkraft auf das Schrumpfelement, um ein Gewicht des Schrumpfelements zumindest teilweise zu kompensieren,
**dadurch gekennzeichnet, dass** das Werkzeug ein Hebewerkzeug ist, das Folgendes umfasst:
- einen Aufhängungsbereich (101, 201),
- Stützschenkel (102, 103, 202, 203), die auf einer Fundamentstruktur des Getriebesystems lehnen und den Aufhängungsbereich über dem Schrumpfelement halten,
- einen Hubriemen (104, 204), der das Schrumpfelement umschließt, und
- ein Krafterzeugungssystem (105, 205), das zwischen dem Aufhängungsbereich und dem Hubriemen verbunden ist und dafür geeignet ist, die Hubkraft zu erzeugen, um das Gewicht des Schrumpfelements zumindest teilweise zu kompensieren.

13. Verfahren nach Anspruch 12, wobei das Verfahren ein Anordnen eines Abstandselements (323, 324) an der inneren Welle und ein Schieben des Schrumpfelements in einer axialen Richtung der Hohlwelle auf das Abstandselement derart, dass das Schrumpfelement von einer Position, an der das Schrumpfelement die Hohlwelle umschließt, weg bewegt wird, umfasst, wobei das Abstandselement das Schrumpfelement in Bezug auf die innere Welle konzentrisch hält, wenn sich das Schrumpfelement auf dem Abstandselement befindet.

14. Verfahren nach Anspruch 12 oder 13, wobei das Getriebesystem ein Teil einer Windenergieanlage ist und der Einsatzort des Getriebesystems eine Gondel der Windenergieanlage ist.

## Revendications

1. Outil de levage pour manipuler un élément rétréci d'un système d'engrenage, l'élément rétréci étant conçu en pressant un arbre creux radicalement contre un arbre intérieur, l'outil de levage comprenant :
- une section de suspension (101, 201),
- des jambes de soutien (102, 103, 202, 203) pour reposer sur une structure de fondation du système d'engrenage et pour soutenir la section de suspension afin qu'elle soit au-dessus de l'élément rétréci,
**caractérisé en ce que** l'outil de levage comprend en outre :
- un harnais de levage (104, 204) pour entourer l'élément rétréci, et
- un système de génération de force (105, 205) raccordé entre la section de suspension et le harnais de levage et adéquat pour générer une force de levage sur le harnais de levage de manière à suspendre l'élément rétréci.

2. Outil de levage selon la revendication 1, dans lequel l'outil de levage comprend en outre un élément d'écarteur (323, 324) adéquat pour être placé sur l'arbre intérieur et pour garder l'élément rétréci concentrique par rapport à l'arbre intérieur dans une situation dans laquelle l'arbre creux est absent d'un espace entre l'élément rétréci et l'arbre intérieur.

3. Outil de levage selon la revendication 1, dans lequel le système de génération de force (105) comprend une tige filetée et un écrou pour générer la force de levage sur le harnais de levage de manière à suspendre l'élément rétréci.

4. Outil de levage selon la revendication 1, dans lequel le système de génération de force (205) comprend un ou plusieurs tendeurs et des vis de tendeur pour générer la force de levage sur le harnais de levage de manière à suspendre l'élément rétréci.

5. Outil de levage selon la revendication 1, dans lequel l'outil de levage comprend en outre une tige de soutien (106, 206) pour reposer sur l'arbre intérieur et pour soutenir la section de suspension afin qu'elle soit au-dessus de l'élément rétréci.

6. Outil de levage selon la revendication 5, dans lequel la tige de soutien (206) comprend deux portions (206a, 206b) et des éléments de fixation (206c) pour fixer les deux portions l'une sur l'autre de sorte qu'une longueur de la tige de soutien soit variable en variant une position réciproque des deux portions.

7. Outil de levage selon la revendication 1, dans lequel la section de suspension (101, 201) est configuré pour permettre de déplacer le système de génération de force dans une direction axiale de l'arbre creux de manière à permettre à l'élément rétréci d'être déplacé dans la direction axiale lorsque l'élément rétréci est suspendu par le harnais de levage.

8. Outil de levage selon la revendication 7, dans lequel la section de suspension (101) comprend une fente allongée (107) dont les bords sont configurés pour soutenir mécaniquement le système de génération de force de sorte que le système de génération de force soit déplaçable dans la direction axiale.

9. Outil de levage selon la revendication 7, dans lequel la section de suspension (201) comprend un rail de guidage (208) pour soutenir mécaniquement le système de génération de force de sorte que le système de génération de force soit déplaçable dans la direction axiale.

10. Outil de levage selon la revendication 7, dans lequel le système de suspension comprend un système d'entraînement (209) pour déplacer le système de génération de force dans la direction axiale.

11. Outil de levage selon la revendication 10, dans lequel le système d'entraînement comprend une tige filetée rotative (210) pour déplacer le système de génération de force dans la direction axiale en réponse à la rotation de la tige filetée rotative.

12. Procédé de manipulation d'un élément rétréci d'un système d'engrenage pendant un travail de maintenance, l'élément rétréci étant conçu pour presser un arbre creux radialement contre un arbre intérieur, le procédé comprenant au moins les actions suivantes au niveau d'un site d'exploitation du système d'engrenage
- installer (401) un outil de sorte que l'outil ait un contact physique avec l'élément rétréci et devienne capable de suspendre l'élément rétréci, et
- diriger (402), vers l'élément rétréci, une force de levage avec l'aide de l'outil de manière à compenser au moins partiellement le poids de l'élément rétréci,
**caractérisé en ce que** l'outil est un outil de levage qui comprend :
- une section de suspension (101, 201),
- des jambes de soutien (102, 103, 202, 203) pour reposer sur une structure de fondation du système d'engrenage et pour soutenir la section de suspension afin qu'elle soit au-dessus de l'élément rétréci,
- un harnais de levage (104, 204) pour entourer l'élément rétréci, et
- un système de génération de force (105, 205) raccordé entre la section de suspension et le harnais de levage et adéquat pour générer une force de levage sur le harnais de levage de manière à suspendre l'élément rétréci.

13. Procédé selon la revendication 12, dans lequel le procédé comprend de placer un élément d'écarteur (323, 324) sur l'arbre intérieur et faire coulisser l'élément rétréci dans une direction axiale de l'arbre creux sur l'élément d'écarteur de sorte que l'élément rétréci soit éloigné d'une position où l'élément rétréci entoure l'arbre creux, l'élément d'écarteur gardant l'élément rétréci concentrique par rapport à l'arbre intérieur lorsque l'élément rétréci se trouve sur l'élément de capteur.

14. Procédé selon la revendication 12 ou 13, dans lequel le système d'engrenage fait partie d'une centrale éolienne et le site d'exploitation du système d'engrenage est une nacelle de la centrale éolienne.
